# EUROPÄISCHE PATENTANMELDUNG

(11) **EP 4 015 120 A1**
(43) Veröffentlichungstag der Anmeldung: **22.06.2022**
(21) Anmeldenummer: 20214068.7
(22) Anmeldetag: 15.12.2020
(51) Int. Cl.: B23B 51/04, B23P 6/00, B23K 31/02, B28D 1/04

(54) **VERFAHREN ZUM AUSTAUSCHEN DER BOHRSEGMENTE EINER BOHRKRONE UND SCHNEIDABSCHNITT FÜR EINE BOHRKRONE**

(71) Anmelder: Hilti Aktiengesellschaft, 9494 Schaan (LI)
(72) Erfinder: Szabó, József, 6000 KECSKEMÉT (HU); Hoop, Matthaeus, 9492 Eschen (LI); Furnemont, Quentin, 9470 Buchs (CH)
(74) Vertreter: Hilti Aktiengesellschaft Corporate Intellectual Property

(57) **Zusammenfassung**

Verfahren zum Austauschen von Bohrsegmenten einer Bohrkrone, deren Bohrschaft (61) mit den Bohrsegmenten verbunden ist, durch neue Bohrsegmente (32), mit den Schritten:
▪ Abtrennen des Bohrschaftes (61),
▪ Aufstecken eines Schneidabschnittes (31), der die neuen Bohrsegmente (32) umfasst, auf den abgetrennten Bohrschaft (61) und
▪ Verbinden des Schneidabschnittes (31) mit dem abgetrennten Bohrschaft (61),
wobei der Schneidabschnitt (31) über mindestens drei Längsschweißnähte (64), die voneinander beabstandet sind, mit dem abgetrennten Bohrschaft (61) verbunden wird.

## Beschreibung

### Technisches Gebiet

Die vorliegende Erfindung betrifft ein Verfahren zum Austauschen der Bohrsegmente einer Bohrkrone gemäß dem Oberbegriff des Anspruchs 1 sowie einen Schneidabschnitt für eine Bohrkrone gemäß dem Oberbegriff des Anspruchs 2.

### Stand der Technik

EP 0 428 476 B1 offenbart eine Bohrkrone, bei der die Bohrsegmente ausgetauscht werden können. Die Bohrkrone ist aus einem Schneidabschnitt und einem Bohrschaft zusammengesetzt, die durch Löten miteinander verbunden werden. Die bekannte Bohrkrone hat den Nachteil, dass ein spezieller Bohrschaft erforderlich ist und das aus EP 0 428 476 B1 bekannte Verfahren zum Austauschen der Bohrsegmente für Bohrkronen mit einem herkömmlichen Bohrschaft ungeeignet ist.

DE 103 50 025 B4 offenbart eine weitere bekannte Bohrkrone, bei der die Bohrsegmente ausgetauscht werden können. Die Bohrkrone ist aus einem Schneidabschnitt und einem Bohrschaft zusammengesetzt, die durch eine umlaufende Nut getrennt sind. Um die Bohrsegmente auszutauschen, wird der Bohrschaft mithilfe einer Säge oder eines Trennschleifers an der vorgesehenen Trennstelle abgetrennt. Am unteren Ende des Bohrschaftes bildet die umlaufende Nut ein inneres Steckelement, das mit einem entsprechenden äusseren Steckelement eines neuen Schneidabschnittes zusammenwirkt und einen Überlappbereich ausbildet; der neue Schneidabschnitt und der abgetrennte Bohrschaft werden im Überlappbereich miteinander verlötet. Die bekannte Bohrkrone hat den Nachteil, dass ein spezieller Bohrschaft erforderlich ist. Das aus DE 103 50 025 B4 bekannte Verfahren zum Austauschen der Bohrsegmente ist für Bohrkronen mit einem herkömmlichen Bohrschaft ungeeignet.

US 9,097,067 B2 offenbart eine weitere bekannte Bohrkrone, bei der die Bohrsegmente ausgetauscht werden können. Die Bohrkrone ist aus einem Schneidabschnitt und einem Bohrschaft zusammengesetzt, die durch Löten miteinander verbunden werden. Um die Bohrsegmente auszutauschen, wird die Lötverbindung erhitzt und der alte Schneidabschnitt abgezogen. Der neue Schneidabschnitt umfasst einen offen ausgebildeten Ringabschnitt mit mehreren Bohrsegmenten, die mit dem Ringabschnitt verbunden sind, sowie einen Steckabschnitt und eine Anschlagschulter am Übergang vom Ringabschnitt zum Steckelement. Der neue Schneidabschnitt wird auf den Bohrschaft aufgesteckt, bis die Stirnfläche des Bohrschaftes an der Anschlagschulter anschlägt. Der Ringabschnitt wird im Bereich des Ausdehnungsspaltes erhitzt und die Ringenden werden durch Löten fixiert. Im Ringabschnitt sind mehrere Lötöffnungen vorgesehen, über die Lotmittel zugeführt wird; durch den Kapillareffekt verteilt sich das Lotmittel gleichmäßig auf beiden Seiten der Lötöffnung. Bevor das Lotmittel in eine Lötöffnung eingeführt wird, wird der Bohrschaft beidseitig der Lötöffnung erhitzt. Die bekannte Bohrkrone weist den Nachteil auf, dass ein spezieller Bohrschaft erforderlich ist und das aus US 9,097,067 B2 bekannte Verfahren zum Austauschen der Bohrsegmente durch einen neuen Schneidabschnitt ist für Bohrkronen mit einem herkömmlichen Bohrschaft ungeeignet.

US 2005/279533 A1 offenbart eine weitere bekannte Bohrkrone, bei der die Bohrsegmente ausgetauscht werden können. Um die alten Bohrsegmente gegen neue Bohrsegmente auszutauschen, wird der Bohrschaft mithilfe einer Säge oder eines Trennschleifers abgetrennt. Anschließend wird ein neuer Schneidabschnitt auf den abgetrennten Bohrschaft aufgesteckt und der neue Schneidabschnitt wird mit dem abgetrennten Bohrschaft verschweißt. Dabei verläuft die Schweißnaht, die den neuen Schneidabschnitt mit dem abgetrennten Bohrschaft verbindet, in einer Ebene senkrecht zur Längsachse des Schneidabschnittes. Der Schneidabschnitt umfasst einen Ringabschnitt, mehrere ringabschnittsförmige Bohrsegmente, die mit dem Ringabschnitt verbunden sind, und einen Steckabschnitt, der doppelwandig mit einem Ringspalt ausgebildet und mit dem Ringabschnitt verbunden ist. In einer alternativen Ausführungsform ist der Steckabschnitt konusförmig ausgebildet, wobei der abgetrennte Bohrschaft in den konusförmigen Steckabschnitt gesteckt wird.

Das aus US 2005/279533 A1 bekannte Verfahren zum Austauschen der Bohrsegmente durch einen neuen Schneidabschnitt hat den Nachteil, dass die Schweißnaht, die den Schneidabschnitt und den abgetrennten Bohrschaft verbindet, nicht oder zumindest nur schlecht überwacht werden kann. Wenn der Bohrschaft nicht gerade abgetrennt wurde, besteht das Risiko, dass der Schneidabschnitt und Bohrschaft nicht über den gesamten Umfang miteinander verschweißt werden.

### Darstellung der Erfindung

Die Aufgabe der vorliegenden Erfindung besteht in der Entwicklung eines Verfahrens zum Austauschen der Bohrsegmente einer Bohrkrone, deren Bohrschaft mit den Bohrsegmenten verbunden ist. Dabei sollen die Bohrsegmente einfach ausgetauscht werden können und die Bohrkrone mit den neuen Bohrsegmenten soll den gleichen Belastungen standhalten, wie die ursprüngliche Bohrkrone.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zum Austauschen der Bohrsegmente einer Bohrkrone ist erfindungsgemäß dadurch gekennzeichnet, dass der neue Schneidabschnitt über mindestens drei Längsschweißnähte, die voneinander verschieden sind, mit dem abgetrennten Bohrschaft verbunden wird. Die Verbindung des neuen Schneidabschnittes mit dem abgetrennten Bohrschaft über Längsschweißnähte, die parallel zur Längsachse des Bohrschaftes verlaufen, hat den Vorteil, dass eine ausreichende Verbindungsfläche zwischen dem abgetrennten Bohrschaft und dem neuen Schneidabschnitt gewährleistet ist.

Die Erfindung betrifft außerdem einen Schneidabschnitt. Der Schneidabschnitt für eine Bohrkrone ist dadurch gekennzeichnet, dass die Ringschulter an der Innenseite des neuen Schneidabschnittes angeordnet ist und der Steckabschnitt mindestens drei Steckelemente und mindestens drei Längsschlitze aufweist, wobei die Längsschlitze die Steckelemente voneinander trennen. Die Trennung der Steckelemente durch die Längsschlitze hat den Vorteil, dass die Verbindung zwischen dem abgetrennten Bohrschaft und dem neuen Schneidabschnitt während des Schweißens vom Bediener überwacht werden kann. Die Möglichkeit, die Überlappungshöhe zu überwachen, gewährleistet, dass die neue Bohrkrone im Verbindungsbereich die geforderten Eigenschaften aufweist.

Bevorzugt weisen die mindestens drei Längsschlitze in einer Längsrichtung, die parallel zur Längsachse verläuft, eine Schlitzhöhe auf, die gleich der Ringhöhe des Steckabschnittes ist. Wenn sich die Längsschlitze über die gesamte zweite Ringhöhe des Steckabschnittes erstrecken, kann der abgetrennte Bohrschaft beim Verschweißen mit dem Schneidabschnitt überwacht werden. Die Überwachung ist vor allem wichtig, wenn der Bohrschaft schräg abgetrennt wurde und der abgetrennte Bohrschaft nicht über seinen gesamten Umfang an der Ringschulter des Schneidabschnittes anliegt.

In einer ersten Variante verlaufen die Längsschlitze zur Längsachse des Schneidabschnittes. In einer zweite Variante sind ein oder mehrere der mindestens drei Längsschlitze zur Längsachse des Schneidabschnittes geneigt.

In einer bevorzugten Weiterentwicklung weist der Steckabschnitt im Bereich der mindestens drei Längsschlitze ein Markierungselement auf, welches in einer Ebene senkrecht zur Längsachse des Schneidabschnittes verläuft. Mithilfe des Markierungselementes kann der Bediener überprüfen, ob die erforderliche Überlappungshöhe zwischen dem neuen Schneidabschnitt und dem abgetrennten Bohrschaft erzielt wird.

Beim Abtrennen des Bohrschaftes vom Schneidabschnitt mithilfe einer Säge oder eines Trennschleifers auf der Baustelle erfolgt der Trennschnitt häufig nicht rechtwinklig zur Längsachse des Bohrschaftes und es bildet sich eine schräg verlaufende Stirnfläche am abgetrennten Bohrschaft. Wenn die Stirnfläche des abgetrennten Bohrschaftes unterhalb des Markierungselementes verläuft, wird die erforderliche Überlappungshöhe erzielt und die Längsschweißnähte weisen die erforderliche Verbindungsfläche auf. Wenn die Stirnfläche des abgetrennten Bohrschaftes an einem oder mehreren Längsschlitzen nicht die erforderliche Überlappungshöhe aufweist, kann der Bediener den abgetrennten Bohrschaft an der Stirnfläche mithilfe der Säge oder des Trennschleifers nachbearbeiten, bis die Stirnfläche des abgetrennten Bohrschaftes an allen Längsschlitzen die erforderliche Überlappungshöhe aufweist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A,: B eine Bohrkrone in einer ersten Variante mit einem ringförmigen Bohrsegment (FIG. 1A) und in einer zweiten Variante mit mehreren ringabschnittsförmigen Bohrsegmenten (FIG. 1B);
- FIGN. 2A, B: einen Schneidabschnitt mit einem neuen ringförmigen Bohrsegment für die Bohrkrone der FIG. 1A (FIG. 2A) und einen Schneidabschnitt mit neuen ringabschnittsförmigen Bohrsegmenten für die Bohrkrone der FIG. 1B (FIG. 2B);
- FIGN. 3A-C: einen Schneidabschnitt, der mit einem abgetrennten Bohrschaft verbunden wird; und
- FIGN. 4A, B: einen Bohrschaft, bei dem die Bohrsegmente abgetrennt wurden (FIG. 4A) und den Schneidabschnitt der FIG. 3A, der mit dem abgetrennten Bohrschaft verschweißt wurde (FIG. 4B).

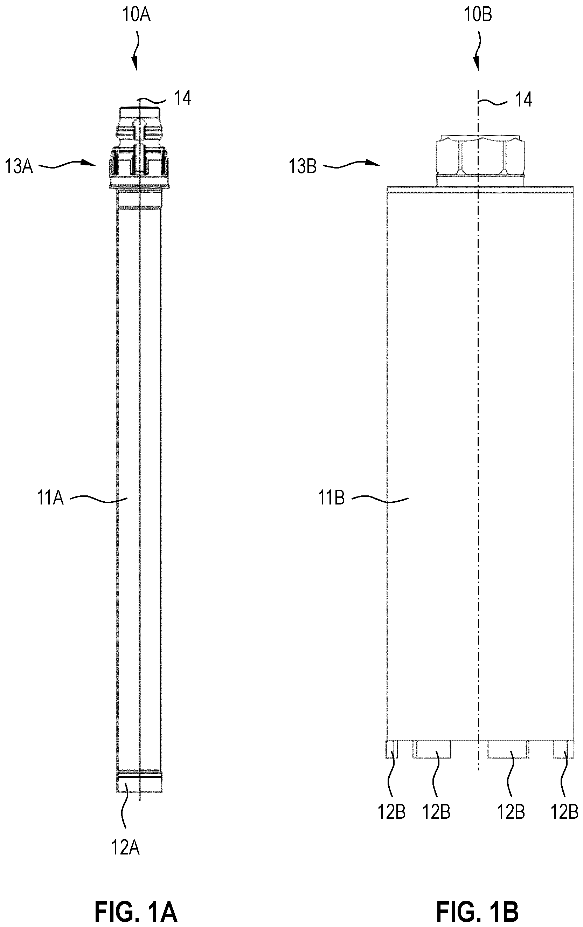

**FIGN. 1A****, B** zeigen eine Bohrkrone in einer ersten Variante (FIG. 1A) und einer zweiten Variante (FIG. 1B). Dabei zeigt FIG. 1A eine Bohrkrone **10A** mit einem Bohrschaft **11A,** einem ringförmigen Bohrsegment **12A** und einer Werkzeugaufnahme **13A** und FIG. 1B zeigt eine Bohrkrone **10B** mit einem Bohrschaft **11B**, mehreren ringabschnittsförmigen Bohrsegmenten **12B** und einer Werkzeugaufnahme **13B.** Das ringförmige Bohrsegment 12A und die ringabschnittsförmigen Bohrsegmente 12B sind fest mit dem jeweiligen Bohrschaft 12A, 12B verbunden, beispielsweise durch Kleben, Löten oder Schweißen. Die Bohrkrone 10A, 10B kann über die jeweilige Werkzeugaufnahme 13A, 13B mit einem Bohrgerät verbunden werden und um eine Längsachse **14** bewegt werden.

Um das ringförmige Bohrsegment 12A der Bohrkrone 10A oder die ringabschnittsförmigen Bohrsegmente 12B der Bohrkrone 10B zu entfernen und durch neue Bohrsegmente ersetzen zu können, wird der Bohrschaft 11A, 11B mithilfe einer Säge oder eines Trennschleifers abgetrennt. Die neuen Bohrsegmente sind an einem Schneidabschnitt befestigt, der mit dem abgetrennten Bohrschaft 11A, 11B verbunden werden soll.

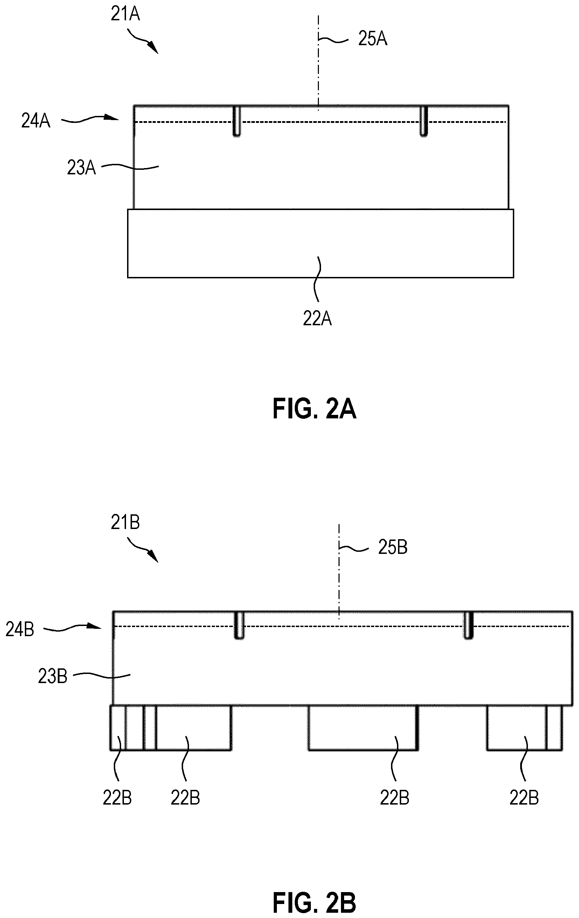

**FIGN. 2A****, B** zeigen einen Schneidabschnitt **21A** mit einem neuen ringförmigen Bohrsegment für die Bohrkrone 10A der FIG. 1A (FIG. 2A) und einen Schneidabschnitt **21B** mit mehreren neuen ringabschnittsförmigen Bohrsegmenten für die Bohrkrone 10B der FIG. 1B (FIG. 2B).

Der Schneidabschnitt 21A für die Bohrkrone 10A der FIG. 1A umfasst ein neues ringförmiges Bohrsegment **22A,** einen Ringabschnitt **23A** und einen Steckabschnitt **24A** und der Schneidabschnitt 21B für die Bohrkrone 10B der FIG. 1B umfasst mehrere neue ringabschnittsförmige Bohrsegmente **22B,** einen Ringabschnitt **23B** und einen Steckabschnitt **24B.** Der Schneidabschnitt 21A weist eine Längsachse **25A** auf und der Schneidabschnitt 21B eine Längsachse **25B.**

Die Schneidabschnitte 21A, 21B unterscheiden sich durch die Anzahl der neuen Bohrsegmente, die Ringabschnitte 23A, 23B und Steckabschnitte 24A, 24B sind analog aufgebaut und unterscheiden sich insbesondere in ihrem Durchmesser. Die Bohrkrone 10A wird typischerweise für Durchmesser bis ca. 50 mm verwendet und die Bohrkrone 10B typischerweise für Durchmesser ab ca. 50 mm. Der Durchmesser der Bohrkrone und die Anzahl der Bohrsegmente spielt für das erfindungsgemäße Verfahren zum Austauschen der Bohrsegmente einer Bohrkrone keine Rolle.

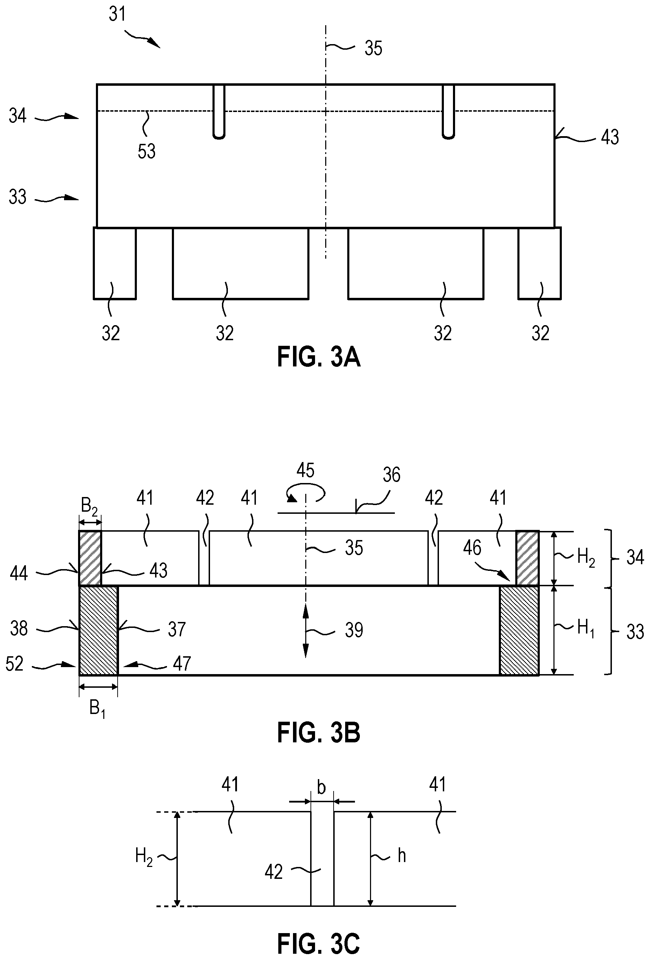

**FIGN. 3A-C** zeigen einen Schneidabschnitt **31,** der mit einem abgetrennten Bohrschaft verbunden werden soll. Dabei zeigt FIG. 3A den Schneidabschnitt 31 in einer Seitenansicht, FIG. 3B einen Längsschnitt durch den Schneidabschnitt 31 und FIG. 3C eine Ausschnittvergrößerung.

Der Schneidabschnitt 31 umfasst mehrere neue ringabschnittsförmige Bohrsegmente **32,** einen Ringabschnitt **33** und einen Steckabschnitt **34.** Der Ringabschnitt 33 ist analog zum Ringabschnitt 23A des Schneidabschnittes 21A der FIG. 2A und zum Ringabschnitt 23B des Schneidabschnittes 21B der FIG. 2B aufgebaut und der Steckabschnitt 34 ist analog zum Steckabschnitt 24A des Schneidabschnittes 21A der FIG. 2A und zum Steckabschnitt 24B des Schneidabschnittes 21B der FIG. 2B aufgebaut. Der Schneidabschnitt 31 weist eine Längsachse **35** auf.

Der Ringabschnitt 33 weist in einer Ebene **36** senkrecht zu der Längsachse 35 eine erste Ringbreite **B₁** zwischen einer ersten inneren Mantelfläche **37** und einer ersten äusseren Mantelfläche **38** auf und erstreckt sich in einer Längsrichtung **39,** die parallel zur Längsachse 35 verläuft, über eine erste Ringhöhe **H₁**.

An dem, den neuen Bohrsegmenten abgewandten Ende des Ringabschnittes 33 ist der Steckabschnitt 34 vorgesehen, der fest mit dem Ringabschnitt 33 verbunden ist. Der Steckabschnitt 34 ist aus mehreren Steckelementen **41** zusammengesetzt, die durch mehrere Längsschlitze **42** voneinander getrennt sind. Die Steckelemente 41 weisen in der Ebene 36 senkrecht zu der Längsachse 35 eine zweite Ringbreite **B₂** zwischen einer zweiten inneren Mantelfläche **43** und einer zweiten äusseren Mantelfläche **44** auf und die Steckelemente 41 erstrecken sich in der Längsrichtung 39 über eine zweite Ringhöhe **H₂**. Im Ausführungsbeispiel weist der Steckabschnitt 34 sechs Steckelemente 41 auf, die über sechs Längsschlitze 42 voneinander getrennt sind. Die Längsschlitze 42 sind in einer Umfangsrichtung **45** des Steckabschnittes 34 gleichmäßig über den Steckabschnitt 34 verteilt.

Die zweite Ringbreite B₂ der Steckelemente 41 ist kleiner als die erste Ringbreite B₁ des Ringabschnittes 33. Am Übergang von der ersten inneren Mantelfläche 37 zur zweiten inneren Mantelfläche 43 bildet sich eine Ringschulter **46** aus, die den Ringabschnitt 33 und den Steckabschnitt 34 an einer Innenseite **47** des Schneidabschnittes 31 trennt. Im Ausführungsbeispiel sind die erste äussere Mantelfläche 38 und die zweite äussere Mantelfläche 44 bündig angeordnet; alternativ kann sich am Übergang von der ersten äusseren Mantelfläche 38 zur zweiten äusseren Mantelfläche 44 eine weitere Ringschulter ausbilden. Der Durchmesser der zweiten äusseren Mantelfläche 44 darf nicht grösser sein als der äussere Durchmesser der neuen Bohrsegmente 32.

Die Längsschlitze 42 weisen in der Ebene 36 senkrecht zu der Längsachse 35 eine Schlitzbreite **b** auf und erstrecken sich in der Längsrichtung 39 über eine Schlitzhöhe **h.** Die Längsschlitze 42 verlaufen im Wesentlichen parallel zu der Längsachse 35. Über die von außen zugänglichen Längsschlitze 42 kann der Bediener beim Schweißen einen Zusatzwerkstoff zuführen.

Die Schlitzhöhe h der Längsschlitze 42 entspricht im Ausführungsbeispiel der zweiten Ringhöhe H₂ des Steckabschnittes 34. Wenn sich die Längsschlitze 42 wie im Ausführungsbeispiel über die gesamte zweite Ringhöhe H₂ des Steckabschnittes 34 erstrecken, kann der abgetrennte Bohrschaft beim Verschweißen mit dem Schneidabschnitt 31 überwacht werden. Die Überwachung ist vor allem wichtig, wenn der Bohrschaft schräg abgetrennt wurde und der abgetrennte Bohrschaft nicht über seinen gesamten Umfang an der Ringschulter 46 des Schneidabschnittes 31 anliegt.

Der Steckabschnitt 34 weist an einer Außenseite **52** ein Markierungselement **53** auf, welches im Bereich der Längsschlitze 42 als Markierungslinie ausgebildet ist und eine Überwachung der Verbindung zwischen dem Schneidabschnitt 31 und einem abgetrennten Bohrschaft ermöglicht. Wenn die Stirnfläche des abgetrennten Bohrschaftes unterhalb der Markierungslinie 53 verläuft, ist die minimale Überlappungshöhe erfüllt und die Längsschweißnähte können die erforderliche Verbindung erzeugen. Wenn die Stirnfläche des abgetrennten Bohrschaftes an einem oder mehreren Längsschlitzen 42 nicht die geforderte Überlappungshöhe aufweist, kann der Bediener den abgetrennten Bohrschaft an der Stirnfläche mithilfe der Säge oder des Trennschleifers nachbearbeiten, bis die Stirnfläche des abgetrennten Bohrschaftes an allen Längsschlitzen 42 die minimale Überlappungshöhe aufweist.

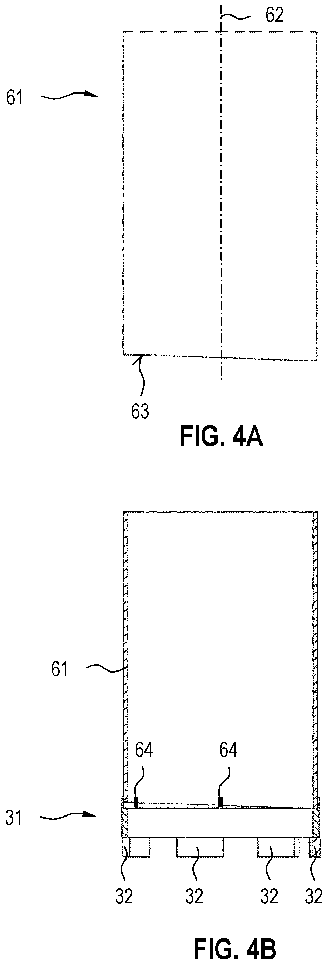

**FIGN. 4A****, B** zeigen einen abgetrennten Bohrschaft **61,** bei dem die Bohrsegmente abgetrennt wurden (FIG. 4A) und den Schneidabschnitt 31 der FIG. 2A, der auf den abgetrennten Bohrschaft 61 aufgesteckt und mit dem abgetrennten Bohrschaft 61 verschweißt wurde (FIG. 4B).

Beim Abtrennen des Bohrschaftes 61 mithilfe einer Säge oder eines Trennschleifers auf der Baustelle erfolgt der Trennschnitt häufig nicht rechtwinklig zu einer Längsachse **62** des Bohrschaftes 61 und es bildet sich eine schräg verlaufende Stirnfläche **63** am abgetrennten Bohrschaft 61. Die schräg verlaufende Stirnfläche 63 führt dazu, dass die Stirnfläche 63 nur in einem kleinen Bereich an der Ringschulter 46 des Schneidabschnittes 31 anliegt.

Zum Verschweißen des Schneidabschnittes 31 mit dem abgetrennten Bohrschaft 61 wird der Schneidabschnitt 31 auf den Bohrschaft 61 aufgesteckt, bis die Stirnfläche 63 des abgetrennten Bohrschaftes 61 an der Ringschulter 46 des Schneidabschnittes 31 anschlägt. In dieser Position werden der Schneidabschnitt 31 und der abgetrennte Bohrschaft 61 über mehrere Längsschweißnähte **64** miteinander verbunden. Die Längsschweißnähte 64 erstrecken sich über die gesamte Schlitzhöhe h der Längsschlitze 42.

## Patentansprüche

1. Verfahren zum Austauschen eines ringförmigen Bohrsegmentes (12A) oder mehrerer ringabschnittsförmiger Bohrsegmente (12B) einer Bohrkrone (10A, 10B), deren Bohrschaft (11A, 11B; 61) mit dem ringförmigen Bohrsegment (12A) oder den ringabschnittsförmigen Bohrsegmenten (12B) verbunden ist, durch ein neues ringförmiges Bohrsegment (22A) oder neue ringabschnittsförmige Bohrsegmente (22B; 32), mit den Schritten:
▪ Abtrennen des Bohrschaftes (11A, 11B; 61),
▪ Aufstecken eines Schneidabschnittes (21A, 21B; 31), der das neue ringförmige Bohrsegment (22A) oder die neuen ringabschnittsförmigen Bohrsegmente (22B; 32) umfasst, auf den abgetrennten Bohrschaft (11A, 11B; 61) und
▪ Verbinden des Schneidabschnittes (21A, 21B; 31) mit dem abgetrennten Bohrschaft (11A, 11B; 61),
**dadurch gekennzeichnet, dass** der Schneidabschnitt (31) über mindestens drei Längsschweißnähte (64), die voneinander beabstandet sind, mit dem abgetrennten Bohrschaft (61) verbunden wird.

2. Schneidabschnitt (21A, 21B; 31) für eine Bohrkrone (10A, 10B), wobei der Schneidabschnitt (21A, 21B; 31) eine Längsachse (25A, 25B; 35) aufweist, aufweisend:
▪ einen Ringabschnitt (23A, 23B; 33),
▪ ein neues ringförmiges Bohrsegment (22A), das mit dem Ringabschnitt (23A) verbunden ist, oder mehrere neue ringabschnittsförmige Bohrsegmente (22B; 32), die mit dem Ringabschnitt (23B; 33) verbunden sind, und
▪ ein Steckabschnitt (24A, 24B; 34), der mit dem Ringabschnitt (23A, 23B; 33) verbunden ist, wobei am Übergang des Steckabschnittes (24A, 24B; 34) zum Ringabschnitt (23A, 23B; 33) eine Ringschulter (46) angeordnet ist,
**dadurch gekennzeichnet, dass** die Ringschulter (46) an einer Innenseite (47) des Schneidabschnittes (21A, 21B; 31) angeordnet ist und der Steckabschnitt (24A, 24B; 34) mindestens drei Steckelemente (41) und mindestens drei Längsschlitze (42) aufweist, wobei die Längsschlitze (42) die Steckelemente (41) voneinander trennen.

3. Schneidabschnitt nach Anspruch 2, **dadurch gekennzeichnet, dass** die mindestens drei Längsschlitze (42) in einer Längsrichtung (39), die parallel zur Längsachse (25A, 25B; 35) des Schneidabschnittes (21A, 21B; 31) verläuft, eine Schlitzhöhe (h) aufweisen, die gleich einer Ringhöhe (H₂) des Steckabschnittes (24A, 24B; 34) ist.

4. Schneidabschnitt nach einem der Ansprüche 2 bis 3, **dadurch gekennzeichnet, dass** der Steckabschnitt (34) im Bereich der mindestens drei Längsschlitze (42) ein Markierungselement (52) aufweist, welches in einer Ebene (36) senkrecht zur Längsachse (35) des Schneidabschnittes (31) verläuft.
